# EUROPEAN PATENT APPLICATION

(11) **EP 4 769 869 A1**
(43) Date of publication of application: **01.07.2026**
(21) Application number: 24938358.9
(22) Date of filing: 04.06.2024
(51) Int. Cl.: H02J 3/46, H02J 3/00

(54) **ELECTRIC ENERGY SCHEDULING METHOD AND APPARATUS, AND COMPUTER READABLE STORAGE MEDIUM**

(30) Priority: 14.05.2024 CN 202410601994
(71) Applicant: Sineng Electric Co., Ltd., Wuxi, Jiangsu 214174 (CN); Suzhou Qiancheng New Energy Technology Co., Ltd., Suzhou, Jiangsu 215101 (CN)
(72) Inventor: DING, Jiajie, Wuxi, Jiangsu 214174 (CN)
(74) Representative: Bayramoglu et al.
(86) International application number: PCT/CN2024/097244
(87) International publication number: WO 2025/236338

(57) **Abstract**

This application provides an electric energy scheduling method and apparatus, and a computer-readable storage medium, and relates to the field of electric power technologies, so as to enhance the flexibility of electric energy scheduling when a combined power grid includes a sub-power grid with an energy storage device and a sub-power grid without an energy storage device. The method is applied to a combined power grid, the combined power grid includes a load, a first sub-power grid, and a second sub-power grid, the first sub-power grid includes a first power generation device and an energy storage device, the second sub-power grid includes a second power generation device, and the combined power grid is connected to a mains supply. The method includes: obtaining a first electricity supply power of supplying electricity by the combined power grid to the load, remaining electric energy of the energy storage device, a first electricity transmission power of transmitting electricity by the combined power grid to the mains supply, and a load power of the load; and scheduling electric energy in the combined power grid based on the first electricity supply power, the remaining electric energy, the first electricity transmission power, and the load power.

## Description

### TECHNICAL FIELD

This application relates to the field of electric energy technologies, and in particular, to an electric energy scheduling method and apparatus, and a computer-readable storage medium.

### BACKGROUND TECHNOLOGY

Sub-power grids are classified into a sub-power grid with an energy storage device and a sub-power grid without an energy storage device. A combined power grid includes a plurality of sub-power grids. Electric energy in the combined power grid may be scheduled to implement effective utilization of the electric energy.

A networking manner of an existing combined power grid is generally networking of a plurality of sub-power grids with energy storage devices, or networking of a plurality of sub-power grids without energy storage devices.

In an existing electric energy scheduling solution, when a combined power grid includes a sub-power grid with an energy storage device and a sub-power grid without an energy storage device, the flexibility of electric energy scheduling is low.

### SUMMARY OF THE INVENTION

### TECHNICAL PROBLEMS

An objective of embodiments of this application is to provide an electric energy scheduling method and apparatus, and a computer-readable storage medium.

### TECHNICAL SOLUTIONS

The following technical solutions are used in this application.

According to a first aspect, an electric energy scheduling method is provided, where the method is applied to a combined power grid, the combined power grid includes a load, a first sub-power grid, and a second sub-power grid, the first sub-power grid includes a first power generation device and an energy storage device, the second sub-power grid includes a second power generation device, and the combined power grid is connected to a mains supply. The method includes: obtaining a first electricity supply power of supplying electricity by the combined power grid to the load, remaining electric energy of the energy storage device, a first electricity transmission power of transmitting electricity by the combined power grid to the mains supply, and a load power of the load; and scheduling electric energy in the combined power grid based on the first electricity supply power, the remaining electric energy, the first electricity transmission power, and the load power.

With reference to the first aspect, in some implementations of the first aspect, when the first electricity supply power is less than the load power, the scheduling electric energy in the combined power grid includes: scheduling electric energy generated by the first power generation device, electric energy generated by the second power generation device, and electric energy stored in the energy storage device to supply electricity to the load, to obtain a second electricity supply power of supplying electricity by the combined power grid to the load, where the second electricity supply power is not less than the load power.

With reference to the first aspect, in some implementations of the first aspect, when the first electricity supply power is not less than the load power and the remaining electric energy is less than a preset electric energy threshold, the scheduling electric energy in the combined power grid includes: scheduling electric energy generated by the first power generation device to charge the energy storage device, to obtain a second electricity supply power of supplying electricity by the combined power grid to the load, where the second electricity supply power is not less than the load power.

With reference to the first aspect, in some implementations of the first aspect, when the first electricity supply power is not less than the load power, the remaining electric energy is not less than the preset electric energy threshold, and the first electricity transmission power is greater than a preset electricity transmission power, the scheduling electric energy in the combined power grid includes: reducing the electric energy generated by the second power generation device, or disabling the second power generation device and reducing the electric energy generated by the first power generation device, to obtain a second electricity transmission power and the second electricity supply power of supplying electricity by the combined power grid to the load, where the second electricity supply power is not less than the load power, and the second electricity transmission power is not greater than the preset electricity transmission power.

According to a second aspect, an electric energy scheduling apparatus is provided to implement the electric energy scheduling method in the first aspect. The apparatus is applied to a combined power grid, the combined power grid includes a load, a first sub-power grid, and a second sub-power grid, the first sub-power grid includes a first power generation device and an energy storage device, the second sub-power grid includes a second power generation device, and the combined power grid is connected to a mains supply. The electric energy scheduling apparatus includes a corresponding module, unit, or means (means) for implementing the foregoing method. The module, the unit, or the means may be implemented by hardware, by software, or by hardware executing corresponding software. The hardware or the software includes one or more modules or units corresponding to the foregoing functions.

With reference to the second aspect, in some implementations of the second aspect, the apparatus includes an obtaining module and a processing module, where the obtaining module is configured to obtain a first electricity supply power of supplying electricity by the combined power grid to the load, remaining electric energy of the energy storage device, a first electricity transmission power of transmitting electricity by the combined power grid to the mains supply, and a load power of the load; and the processing module is configured to schedule electric energy in the combined power grid based on the first electricity supply power, the remaining electric energy, the first electricity transmission power, and the load power.

With reference to the second aspect, in some implementations of the second aspect, when the first electricity supply power is less than the load power, the processing module being configured to schedule electric energy in the combined power grid includes: scheduling electric energy generated by the first power generation device, electric energy generated by the second power generation device, and electric energy stored in the energy storage device to supply electricity to the load, to obtain a second electricity supply power of supplying electricity by the combined power grid to the load, where the second electricity supply power is not less than the load power.

With reference to the second aspect, in some implementations of the second aspect, when the first electricity supply power is not less than the load power and the remaining electric energy is less than a preset electric energy threshold, the processing module being configured to schedule electric energy in the combined power grid includes: scheduling electric energy generated by the first power generation device to charge the energy storage device, to obtain a second electricity supply power of supplying electricity by the combined power grid to the load, where the second electricity supply power is not less than the load power.

With reference to the second aspect, in some implementations of the second aspect, when the first electricity supply power is not less than the load power, the remaining electric energy is not less than the preset electric energy threshold, and the first electricity transmission power is greater than a preset electricity transmission power, the processing module being configured to schedule electric energy in the combined power grid includes: reducing the electric energy generated by the second power generation device, or disabling the second power generation device and reducing the electric energy generated by the first power generation device, to obtain a second electricity transmission power and the second electricity supply power of supplying electricity by the combined power grid to the load, where the second electricity supply power is not less than the load power, and the second electricity transmission power is not greater than the preset electricity transmission power.

According to a third aspect, an electric energy scheduling apparatus is provided, including at least one processor and a memory configured to store instructions executable by the processor, where the processor is configured to execute the instructions, to implement the method according to any one of the first aspect and the possible implementations thereof.

According to a fourth aspect, a computer-readable storage medium is provided, where when instructions in the computer-readable storage medium are executed by a processor in an electric energy scheduling apparatus, the electric energy scheduling apparatus is enabled to perform the method according to any one of the first aspect and the possible implementations thereof.

According to a fifth aspect, a computer program product including instructions is provided, where when the computer program product runs on a computer, the computer is enabled to perform the method according to any one of the first aspect and the possible implementations thereof.

According to a sixth aspect, a chip system is provided, including a processor and an interface circuit, where the interface circuit is configured to receive a computer program or instructions and transmit the computer program or the instructions to the processor; and the processor is configured to execute the computer program or the instructions, to enable the chip system to perform the method according to any one of the first aspect and the possible implementations thereof.

### BENEFICIAL EFFECTS

A beneficial effect of an electric energy scheduling method provided in an embodiment of this application is as follows: In a combined power grid, a first sub-power grid includes an energy storage device while a second sub-power grid does not include an energy storage device. A first electricity supply power of supplying electricity by the combined power grid to a load, remaining electric energy of the energy storage device, a first electricity transmission power of transmitting electricity by the combined power grid to a mains supply, and a load power of the load are obtained. Then, electric energy in the combined power grid is scheduled based on the first electricity supply power, the remaining electric energy, the first electricity transmission power, and the load power. Thus, the flexibility of electric energy scheduling can be enhanced when a combined power grid includes a sub-power grid with an energy storage device and a sub-power grid without an energy storage device.

### DESCRIPTION OF THE DRAWINGS

To describe the technical solutions in embodiments of this application more clearly, the following briefly describes the accompanying drawings that need to be used in the embodiments or exemplary technical descriptions. Clearly, the accompanying drawings in the following descriptions show merely some embodiments of this application, and a person of ordinary skill in the art may still derive other drawings from these accompanying drawings without creative efforts.
FIG. 1 is a schematic diagram of an architecture of an electric energy scheduling system according to this application;
FIG. 2 is a schematic flowchart of an electric energy scheduling method according to this application;
FIG. 3 is a schematic diagram of a structure of an electric energy scheduling apparatus according to this application; and
FIG. 4 is a schematic diagram of a structure of another electric energy scheduling apparatus according to this application.

### IMPLEMENTATIONS OF THE INVENTION

In description of this application, the term "a plurality of" means two or more unless otherwise specified. "At least one of the following items" or a similar expression means any combination of these items, including a single item or any combination of a plurality of items. For example, at least one of a, b, or c may represent a, b, c, a and b, a and c, b and c, or a, b, and c, where a, b, and c may be singular or plural.

In addition, to facilitate clear description of the technical solutions in the embodiments of this application, in the embodiments of this application, words such as "first" and "second" are used to distinguish between same items or similar items whose functions and effects are basically the same. A person skilled in the art may appreciate that the words such as "first" and "second" do not limit a quantity or an execution order, and the words such as "first" and "second" do not necessarily indicate a difference.

In addition, in the embodiments of this application, words such as "example" or "for example" are used to represent giving an example, an illustration, or a description. Any embodiment or design solution described by using "example" or "for example" in the embodiments of this application should not be interpreted as being more preferred or having more advantages than another embodiment or design solution. Exactly, use of the words such as "example" or "for example" is intended to present related concepts in a specific manner for ease of understanding.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that in the embodiments of this application, sequence numbers of the processes do not mean an execution sequence. The execution sequence of the processes should be determined based on functions and internal logic of the processes, and should not be construed as any limitation on the implementation processes of the embodiments of this application.

It may be understood that, in this application, "when..." and "if" refer to the corresponding processing in an objective situation, which is not a time limit, and does not require that a determining action exists during implementation, and does not mean that other restrictions exist.

It may be understood that some optional features in the embodiments of this application may not depend on another feature in some scenarios, for example, a solution on which the feature is currently based, may be independently implemented to resolve a corresponding technical problem and achieve a corresponding effect, or may be combined with another feature in some scenarios according to a requirement. Correspondingly, the apparatus provided in the embodiments of this application may also correspondingly implement these features or functions. Details are not described herein.

In this application, unless otherwise specified, a same or similar part of the embodiments may be mutually referenced. In the embodiments of this application and the implementation methods in the embodiments, if no special description or logical conflict exists, terms and/or descriptions between different embodiments and between implementation methods in the embodiments are consistent and may be mutually referenced. Technical features in different embodiments and the implementation methods in the embodiments may be combined to form a new embodiment, implementation, or implementation method according to an internal logical relationship thereof. The following implementations of this application do not constitute a limitation on the protection scope of this application.

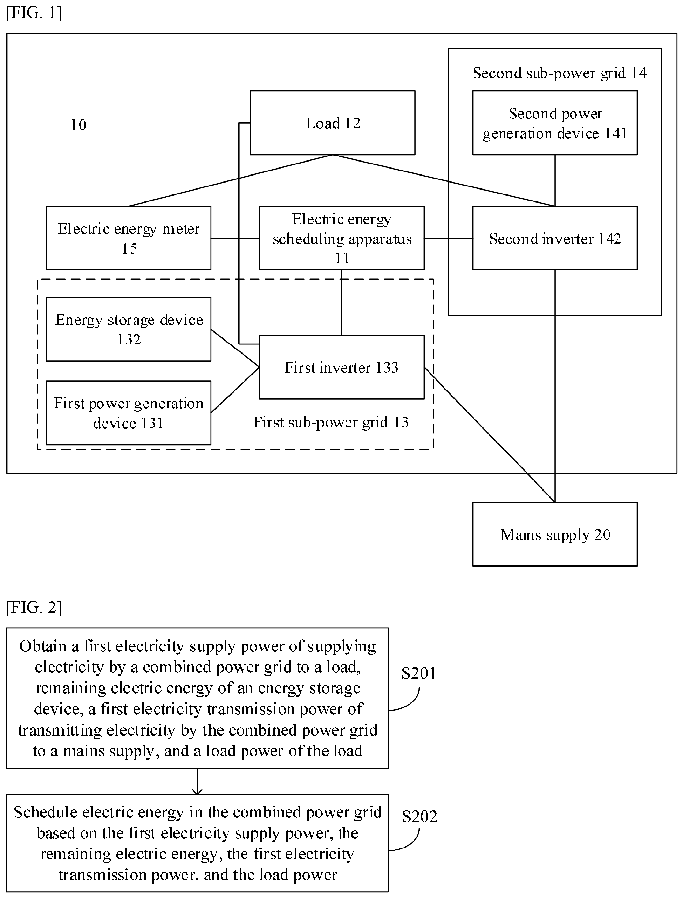

FIG. 1 is a schematic diagram of an architecture of an electric energy scheduling system according to this application. A technical solution in an embodiment of this application may be applied to a combined power grid shown in FIG. 1. As shown in FIG. 1, the combined power grid 10 includes an electric energy scheduling apparatus 11, a load 12, a first sub-power grid 13, a second sub-power grid 14, and an electric energy meter 15. The first sub-power grid 13 includes a first power generation device 131, an energy storage device 132, and a first inverter 133. The second sub-power grid includes a second power generation device 141 and a second inverter 142.

The combined power grid 10 is connected to a mains supply 20 separately by using the first inverter 133 and the second inverter 142. The electric energy scheduling apparatus 11 is separately connected to the electric energy meter 15, the first inverter 133, and the second inverter 142. The first inverter 133 is connected to the first power generation device 131, the energy storage device 132, and the load 12. The second inverter 142 is connected to the second power generation device 141 and the load 12. The load 12 is connected to the electric energy meter 15.

The electric energy scheduling apparatus 11 may communicate with the first inverter 133 and the second inverter 142, and send a control instruction to the first inverter 133 and the second inverter 142, so as to schedule electric energy in the combined power grid 10.

Electric energy generated by the first power generation device 131 may be delivered to the load 12 by using the first inverter 133, or may be delivered to the mains supply 20 by using the first inverter 133, or may be delivered to the energy storage device 132 by using the first inverter 133.

Electric energy generated by the second power generation device 141 may be delivered to the load 12 by using the second inverter 142, or may be delivered to the mains supply 20 by using the second inverter 142.

The electric energy meter 15 is configured to detect a load power of the load 12.

In actual application, an electric energy scheduling method provided in an embodiment of this application may be applied to the electric energy scheduling apparatus 11, or may be applied to an apparatus included in the electric energy scheduling apparatus 11.

The following describes, with reference to accompanying drawings, the electric energy scheduling method provided in an embodiment of this application by using an example in which the electric energy scheduling method is applied to the electric energy scheduling apparatus 11.

FIG. 2 is a schematic flowchart of an electric energy scheduling method according to this application. The method is applied to the foregoing combined power grid, the combined power grid includes a load, a first sub-power grid, and a second sub-power grid, the first sub-power grid includes a first power generation device and an energy storage device, the second sub-power grid includes a second power generation device, and the combined power grid is connected to a mains supply. As shown in FIG. 2, the method includes the following steps.

S201: An electric energy scheduling apparatus obtains a first electricity supply power of supplying electricity by the combined power grid to the load, remaining electric energy of the energy storage device, a first electricity transmission power of transmitting electricity by the combined power grid to the mains supply, and a load power of the load.

It should be noted that the load may be an air conditioner, or the load may be a heater. This is not specifically limited in this application.

The energy storage device may be a charging battery.

In a possible implementation, the electric energy scheduling apparatus receives a message of an input device of the electric energy scheduling apparatus, where the message includes a first electricity supply power of supplying electricity by the combined power grid to the load, remaining electric energy of the energy storage device, a first electricity transmission power of transmitting electricity by the combined power grid to the mains supply, and a load power of the load; and the electric energy scheduling apparatus obtains, from the message, the first electricity supply power of supplying electricity by the combined power grid to the load, the remaining electric energy of the energy storage device, the first electricity transmission power of transmitting electricity by the combined power grid to the mains supply, and the load power of the load.

In another possible implementation, with reference to FIG. 1, the electric energy scheduling apparatus receives a first message of a first inverter, where the first message includes a third electricity supply power of supplying electricity by the first inverter to the load, and a third electricity transmission power of transmitting electricity by the first inverter to the mains supply; and the electric energy scheduling apparatus obtains the third electricity supply power and the third electricity transmission power from the first message.

The electric energy scheduling apparatus receives a second message of a second inverter, where the second message includes a fourth electricity supply power of supplying electricity by the second inverter to the load, and a fourth electricity transmission power of transmitting electricity by the second inverter to the mains supply; and the electric energy scheduling apparatus obtains the fourth electricity supply power and the fourth electricity transmission power from the second message.

The electric energy scheduling apparatus adds up the third electricity supply power and the fourth electricity supply power to obtain the first electricity supply power, and adds up the third electricity transmission power and the fourth electricity transmission power to obtain the first electricity transmission power.

The electric energy scheduling apparatus receives a third message of the electric energy meter, where the third message includes the load power of the load, and the electric energy scheduling apparatus obtains the load power from the third message.

The electric energy scheduling apparatus receives a fourth message of the energy storage device, where the fourth message includes the remaining electric energy of the energy storage device, and the electric energy scheduling apparatus obtains the remaining electric energy from the fourth message.

S202: The electric energy scheduling apparatus schedules electric energy in the combined power grid based on the first electricity supply power, the remaining electric energy, the first electricity transmission power, and the load power.

In a possible implementation, the electric energy scheduling apparatus determines whether the first electricity supply power is less than the load power.

When the first electricity supply power is less than the load power, the electric energy scheduling apparatus schedules electric energy generated by the first power generation device, electric energy generated by the second power generation device, and electric energy stored in the energy storage device to supply electricity to the load, to obtain a second electricity supply power of supplying electricity by the combined power grid to the load.

The second electricity supply power is not less than the load power.

On this basis, when the first electricity supply power is less than the load power, it indicates that electric energy obtained by the load is insufficient in this case. The electric energy generated by the first power generation device, the electric energy generated by the second power generation device, and the electric energy stored in the energy storage device are scheduled to supply electricity to the load, to obtain the second electricity supply power of supplying electricity by the combined power grid to the load. Because the second electricity supply power is not less than the load power, the load can obtain sufficient electric energy, thereby improving stability of supplying electricity to the load.

When the first electricity supply power is not less than the load power, the electric energy scheduling apparatus determines whether the remaining electric energy is less than a preset electric energy threshold.

When the first electricity supply power is not less than the load power and the remaining electric energy is less than the preset electric energy threshold, the electric energy scheduling apparatus schedules electric energy generated by the first power generation device to charge the energy storage device, to obtain a second electricity supply power of supplying electricity by the combined power grid to the load.

The second electricity supply power is not less than the load power.

On this basis, when the first electricity supply power is not less than the load power and the remaining electric energy is less than the preset electric energy threshold, it indicates that in this case, the load obtains sufficient electric energy, but the electric energy in the energy storage device is insufficient. The electric energy generated by the first power generation device is scheduled to charge the energy storage device, to obtain a second electricity supply power of supplying electricity by the combined power grid to the load. Because the second electricity supply power is not less than the load power, the energy storage device can be charged without affecting electricity supply to the load, thereby improving usage of the electric energy.

When the first electricity supply power is not less than the load power and the remaining electric energy is not less than the preset electric energy threshold, the electric energy scheduling apparatus determines whether the first electricity transmission power is greater than a preset electricity transmission power.

When the first electricity supply power is not less than the load power, the remaining electric energy is not less than the preset electric energy threshold, and the first electricity transmission power is greater than the preset electricity transmission power, the electric energy scheduling apparatus reduces the electric energy generated by the second power generation device, or disables the second power generation device and reduces the electric energy generated by the first power generation device, to obtain a second electricity transmission power and the second electricity supply power of supplying electricity by the combined power grid to the load.

The second electricity supply power is not less than the load power, and the second electricity transmission power is not greater than the preset electricity transmission power.

On this basis, when the first electricity supply power is not less than the load power, the remaining electric energy is not less than the preset electric energy threshold, and the first electricity transmission power is greater than the preset electricity transmission power, it indicates that in this case, the load obtains sufficient electric energy and the electric energy in the energy storage device is sufficient, but much electric energy is output to the mains supply. The electric energy generated by the second power generation device is reduced, or the second power generation device is disabled and the electric energy generated by the first power generation device is reduced, to obtain a second electricity transmission power and the second electricity supply power of supplying electricity by the combined power grid to the load. On the one hand, because the second electricity supply power is not less than the load power, a power of outputting electric energy to the mains supply can be prevented from exceeding the preset electricity transmission power, without affecting electricity supply to the load. On the other hand, because the first power generation device may charge the energy storage device, but the second power generation device may not charge the energy storage device, the electric energy generated by the second power generation device is preferentially reduced, so as to ensure electric energy supply of the energy storage device to the greatest extent.

It should be noted that, in this possible implementation, for a specific implementation process of scheduling electric energy, refer to an existing solution. Details are not described herein in this application.

Based on this solution, in a combined power grid, a first sub-power grid includes an energy storage device while a second sub-power grid does not include an energy storage device. A first electricity supply power of supplying electricity by the combined power grid to a load, remaining electric energy of the energy storage device, a first electricity transmission power of transmitting electricity by the combined power grid to a mains supply, and a load power of the load are obtained. Then, electric energy in the combined power grid is scheduled based on the first electricity supply power, the remaining electric energy, the first electricity transmission power, and the load power. Thus, the flexibility of electric energy scheduling can be enhanced when a combined power grid includes a sub-power grid with an energy storage device and a sub-power grid without an energy storage device.

The solutions provided in the embodiments of this application are mainly described above from a perspective of performing an electric energy scheduling method by an electric energy scheduling apparatus. To implement the foregoing functions, the electric energy scheduling apparatus includes corresponding hardware structures and/or software modules for performing the functions. A person skilled in the art should be easily aware that, in combination with example units and algorithm steps described in the embodiments disclosed in this specification, the embodiments of this application can be implemented by hardware or a combination of hardware and computer software. Whether a specific function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In the embodiments of this application, the electric energy scheduling apparatus may be divided into functional modules based on the foregoing method examples, for example, each functional module may be obtained through division for each corresponding function, or two or more functions may be integrated into one processing module. The foregoing integrated module may be implemented in a form of hardware, or may be implemented in a form of a software functional module. Optionally, division into the modules in the embodiments of this application is an example, and is merely logical function division. During actual implementation, there may be another division manner. In addition, the "module" herein may refer to an application-specific integrated circuit (application-specific integrated circuit, ASIC), a circuit, a processor that executes one or more software or firmware programs and a memory, an integrated logic circuit, and/or another component that can provide the foregoing functions.

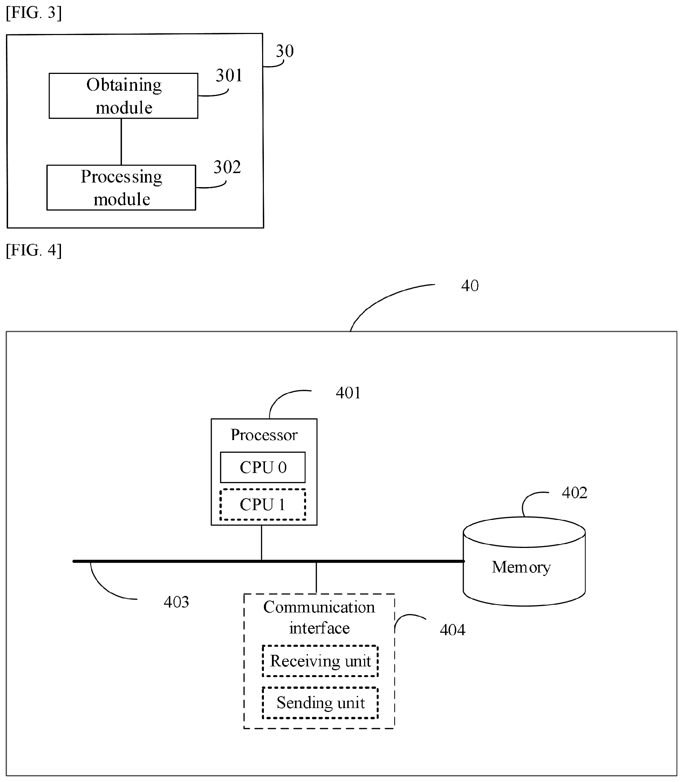

When division into the functional modules is used, refer to FIG. 3, which is a schematic diagram of a structure of an electric energy scheduling apparatus. As shown in FIG. 3, the electric energy scheduling apparatus 30 includes an obtaining module 301 and a processing module 302.

In some embodiments, the electric energy scheduling apparatus 30 may further include a storage module (not shown in FIG. 3) configured to store program instructions and data.

The obtaining module 301 is configured to obtain a first electricity supply power of supplying electricity by the combined power grid to the load, remaining electric energy of the energy storage device, a first electricity transmission power of transmitting electricity by the combined power grid to the mains supply, and a load power of the load. The processing module 302 is configured to schedule electric energy in the combined power grid based on the first electricity supply power, the remaining electric energy, the first electricity transmission power, and the load power.

Optionally, when the first electricity supply power is less than the load power, the processing module 302 being configured to schedule electric energy in the combined power grid includes: scheduling electric energy generated by the first power generation device, electric energy generated by the second power generation device, and electric energy stored in the energy storage device to supply electricity to the load, to obtain a second electricity supply power of supplying electricity by the combined power grid to the load, where the second electricity supply power is not less than the load power.

Optionally, when the first electricity supply power is not less than the load power and the remaining electric energy is less than a preset electric energy threshold, the processing module 302 being configured to schedule electric energy in the combined power grid includes: scheduling electric energy generated by the first power generation device to charge the energy storage device, to obtain a second electricity supply power of supplying electricity by the combined power grid to the load, where the second electricity supply power is not less than the load power.

Optionally, when the first electricity supply power is not less than the load power, the remaining electric energy is not less than the preset electric energy threshold, and the first electricity transmission power is greater than a preset electricity transmission power, the processing module 302 being configured to schedule electric energy in the combined power grid includes: reducing the electric energy generated by the second power generation device, or disabling the second power generation device and reducing the electric energy generated by the first power generation device, to obtain a second electricity transmission power and the second electricity supply power of supplying electricity by the combined power grid to the load, where the second electricity supply power is not less than the load power, and the second electricity transmission power is not greater than the preset electricity transmission power.

All related content of the steps in the foregoing method embodiment may be cited to function descriptions of corresponding functional modules. Details are not described herein again.

When the functions of the functional modules are implemented in a form of hardware, refer to FIG. 4, which is a schematic diagram of a structure of another electric energy scheduling apparatus. As shown in FIG. 4, the electric energy scheduling apparatus 40 includes a processor 401, a memory 402, and a bus 403. The processor 401 may be connected to the memory 402 by using the bus 403.

The processor 401 is a control center of the electric energy scheduling apparatus 40, and may be a processor, or may be a general term of a plurality of processing elements. For example, the processor 401 may be a general-purpose central processing unit (central processing unit, CPU), another general-purpose processor, or the like. The general-purpose processor may be a microprocessor, any conventional processor, or the like.

In an embodiment, the processor 401 may include one or more CPUs, such as a CPU 0 and a CPU 1 shown in FIG. 4.

The memory 402 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc storage medium or another magnetic storage device, or any other medium capable of carrying or storing desired program code in a form of instructions or data structures and capable of being accessed by a computer, but is not limited thereto.

In a possible implementation, the memory 402 may exist independently of the processor 401, and the memory 402 may be connected to the processor 401 by using the bus 403, to store instructions or program code. When invoking and executing the instructions or the program code stored in the memory 402, the processor 401 can implement the electric energy scheduling method provided in the embodiments of this application.

In another possible implementation, the memory 402 may alternatively be integrated with the processor 401.

The bus 403 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used for representation in FIG. 4, but this does not indicate that there is only one bus or one type of bus.

It should be noted that the structure shown in FIG. 4 does not constitute a limitation on the electric energy scheduling apparatus 40. In addition to the components shown in FIG. 4, the electric energy scheduling apparatus 40 may include more or fewer components than those shown in the figure, combine some components, or have different component arrangements.

In an example, with reference to FIG. 3, functions implemented by the obtaining module 301 and the processing module 302 in the electric energy scheduling apparatus 30 are the same as the functions of the processor 401 in FIG. 4.

Optionally, as shown in FIG. 4, the electric energy scheduling apparatus 40 provided in this embodiment of this application may further include a communication interface 404.

The communication interface 404 is configured to connect to another device by using a communication network. The communication network may be an Ethernet, a radio access network, a wireless local area network (wireless local area networks, WLAN), or the like. The communication interface 404 may include a receiving unit configured to receive data and a sending unit configured to send data.

In a possible implementation, in the electric energy scheduling apparatus 40 provided in this embodiment of this application, the communication interface 404 may be further integrated into the processor 401. This is not specifically limited in this embodiment of this application.

As a possible product form, the electric energy scheduling apparatus in this embodiment of this application may alternatively be implemented by using one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described in the full text of this application.

According to the foregoing descriptions of the implementations, a person skilled in the art may clearly understand that, for convenience and brevity of description, division of the foregoing functional units is merely used as an example for description. In actual application, the foregoing functions may be allocated to different functional units according to a requirement, that is, an internal structure of the apparatus is divided into different functional units, to complete all or some of the functions described above. For specific working processes of the foregoing system, apparatus, and unit, refer to corresponding processes in the foregoing method embodiments. Details are not described herein again.

An embodiment of this application further provides a computer-readable storage medium having a computer program or instructions stored thereon. When the computer program or the instructions are executed, a computer is enabled to perform the steps in the method procedure shown in the foregoing method embodiments.

An embodiment of this application provides a computer program product including instructions. When the instructions are run on a computer, the computer is enabled to perform the steps in the method procedure shown in the foregoing method embodiment.

An embodiment of this application provides a chip system, including a processor and an interface circuit. The interface circuit is configured to receive a computer program or instructions and transmit the computer program or the instructions to the processor. The processor is configured to execute the computer program or the instructions, to enable the chip system to perform the steps in the method procedure shown in the foregoing method embodiment.

The computer-readable storage medium may be, for example but not limited to, an electronic, magnetic, optical, electromagnetic, infrared, or semiconductor system, apparatus, or component, or any combination thereof. A more specific example (a non-exhaustive list) of the computer-readable storage medium includes: an electrical connection with one or more wires, a portable computer disk, and a hard disk. The computer-readable storage medium is a random access memory (Random Access Memory, RAM), a read-only memory (Read-Only Memory, ROM), an erasable programmable read-only memory (Erasable Programmable Read Only Memory, EPROM), a register, a hard disk, an optical fiber, a compact disc read-only memory (Compact Disc Read-Only Memory, CD-ROM), an optical storage device, a magnetic storage device, any proper combination thereof, or any other form of computer-readable storage medium in the art. An example storage medium is coupled to the processor, to enable the processor to read information from and write information to the storage medium. Certainly, the storage medium may alternatively be an integral part of the processor. The processor and the storage medium may be located in an application-specific ASIC. In this embodiment of this application, the computer-readable storage medium may be any tangible medium that includes or stores a program, and the program may be used by or in combination with an instruction execution system, apparatus, or component.

The electric energy scheduling apparatus, the computer-readable storage medium, and the computer program product provided in the embodiments may be applied to the foregoing electric energy scheduling method provided in the embodiments. Therefore, for a technical effect that can be achieved by the electric energy scheduling apparatus, the computer-readable storage medium, and the computer program product, refer to the foregoing method embodiments. Details are not described herein again in this embodiment of this application.

Although this application is described with reference to the embodiments herein, in a process of implementing the claimed protection in this application, another variation of the disclosed embodiments may be understood and implemented by a person skilled in the art by viewing the accompanying drawings, the disclosed content, and the appended claims. In the claims, the word "comprising" (comprising) does not rule out other components or steps, and "a/an" or "one" does not rule out "a plurality of". A single processor or another unit may implement several functions listed in the claims. Some measures are documented in different dependent claims, but this does not mean that these measures cannot be combined to produce a good effect.

Although this application is described with reference to specific features and embodiments, it is clear that various modifications and combinations may be made to this application without departing from the spirit and scope of this application. Correspondingly, this specification and the accompanying drawings are merely example descriptions of this application defined by the appended claims and are considered to cover any and all of modifications, variations, combinations, or equivalents within the scope of this application. Clearly, a person skilled in the art can make various modifications and variations to this application without departing from the spirit and scope of this application. In this way, this application is also intended to include these modifications and variations, provided that these modifications and variations of this application fall within the scope of the claims of this application and equivalent technologies thereof.

## Claims

1. An electric energy scheduling method, wherein the method is applied to a combined power grid, the combined power grid comprises a load, a first sub-power grid, and a second sub-power grid, the first sub-power grid comprises a first power generation device and an energy storage device, the second sub-power grid comprises a second power generation device, the combined power grid is connected to a mains supply, and the method comprises:
obtaining a first electricity supply power of supplying electricity by the combined power grid to the load, remaining electric energy of the energy storage device, a first electricity transmission power of transmitting electricity by the combined power grid to the mains supply, and a load power of the load; and
scheduling electric energy in the combined power grid based on the first electricity supply power, the remaining electric energy, the first electricity transmission power, and the load power.

2. The method according to claim 1, wherein when the first electricity supply power is less than the load power, the scheduling electric energy in the combined power grid comprises:
scheduling electric energy generated by the first power generation device, electric energy generated by the second power generation device, and electric energy stored in the energy storage device to supply electricity to the load, to obtain a second electricity supply power of supplying electricity by the combined power grid to the load, wherein the second electricity supply power is not less than the load power.

3. The method according to claim 1, wherein when the first electricity supply power is not less than the load power and the remaining electric energy is less than a preset electric energy threshold, the scheduling electric energy in the combined power grid comprises:
scheduling electric energy generated by the first power generation device to charge the energy storage device, to obtain a second electricity supply power of supplying electricity by the combined power grid to the load, wherein the second electricity supply power is not less than the load power.

4. The method according to any one of claims 1 to 3, wherein when the first electricity supply power is not less than the load power, the remaining electric energy is not less than the preset electric energy threshold, and the first electricity transmission power is greater than a preset electricity transmission power, the scheduling electric energy in the combined power grid comprises:
reducing the electric energy generated by the second power generation device, or disabling the second power generation device and reducing the electric energy generated by the first power generation device, to obtain a second electricity transmission power and the second electricity supply power of supplying electricity by the combined power grid to the load, wherein the second electricity supply power is not less than the load power, and the second electricity transmission power is not greater than the preset electricity transmission power.

5. An electric energy scheduling apparatus, wherein the apparatus is applied to a combined power grid, the combined power grid comprises a load, a first sub-power grid, and a second sub-power grid, the first sub-power grid comprises a first power generation device and an energy storage device, the second sub-power grid comprises a second power generation device, the combined power grid is connected to a mains supply, and the apparatus comprises an obtaining module and a processing module; the obtaining module is configured to obtain a first electricity supply power of supplying electricity by the combined power grid to the load, remaining electric energy of the energy storage device, a first electricity transmission power of transmitting electricity by the combined power grid to the mains supply, and a load power of the load; and
the processing module is configured to schedule electric energy in the combined power grid based on the first electricity supply power, the remaining electric energy, the first electricity transmission power, and the load power.

6. The apparatus according to claim 5, wherein when the first electricity supply power is less than the load power, the processing module being configured to schedule electric energy in the combined power grid comprises:
scheduling electric energy generated by the first power generation device, electric energy generated by the second power generation device, and electric energy stored in the energy storage device to supply electricity to the load, to obtain a second electricity supply power of supplying electricity by the combined power grid to the load, wherein the second electricity supply power is not less than the load power.

7. The apparatus according to claim 5, wherein when the first electricity supply power is not less than the load power and the remaining electric energy is less than a preset electric energy threshold, the processing module being configured to schedule electric energy in the combined power grid comprises:
scheduling electric energy generated by the first power generation device to charge the energy storage device, to obtain a second electricity supply power of supplying electricity by the combined power grid to the load, wherein the second electricity supply power is not less than the load power.

8. The apparatus according to any one of claims 5 to 7, wherein when the first electricity supply power is not less than the load power, the remaining electric energy is not less than the preset electric energy threshold, and the first electricity transmission power is greater than a preset electricity transmission power, the processing module being configured to schedule electric energy in the combined power grid comprises:
reducing the electric energy generated by the second power generation device, or disabling the second power generation device and reducing the electric energy generated by the first power generation device, to obtain a second electricity transmission power and the second electricity supply power of supplying electricity by the combined power grid to the load, wherein the second electricity supply power is not less than the load power, and the second electricity transmission power is not greater than the preset electricity transmission power.

9. An electric energy scheduling apparatus, wherein the electric energy scheduling apparatus comprises a processor, the processor is coupled to a memory, the memory is configured to store a program or instructions, and when the program or the instructions are executed by the processor, the apparatus is enabled to perform the method according to any one of claims 1 to 4.

10. A computer-readable storage medium, having a computer program or instructions stored thereon, wherein when the computer program or the instructions are executed, a computer is enabled to perform the method according to any one of claims 1 to 4.
